Europäisches Patentamt

**(19)** European Patent Office

Office européen des brevets

**(11)** **EP 0 596 764 B1**

**(12)** **FASCICULE DE BREVET EUROPEEN**

**(45)** Date de publication et mention
de la délivrance du brevet:
**28.05.1997  Bulletin 1997/22**

**(51)** Int. Cl.[6]: **B01D 65/08**

**(21)** Numéro de dépôt: **93402535.4**

**(22)** Date de dépôt: **14.10.1993**

**(54)** **Dispositif et procédé pour effectuer la séparation de phases par filtration et centrifugation**

Vorrichtung und Verfahren zur Durchführung der Phasentrennung durch Filtration und Zentrifugation

Device and process for carrying out the phase separation by filtration and centrifugation

**(84)** Etats contractants désignés:
**DE DK GB IT NL**

**(30)** Priorité:  **05.11.1992 FR 9213359**

**(43)** Date de publication de la demande:
**11.05.1994  Bulletin 1994/19**

**(73)** Titulaire: **INSTITUT FRANCAIS DU PETROLE**
**92506 Rueil-Malmaison Cédex (FR)**

**(72)** Inventeurs:
- **Prevost, Isabelle**
  **F-92500 Rueil Malmaison (FR)**

- **Rojey, Alexandre**
  **F-92500 Rueil Malmaison (FR)**

**(56)** Documents cités:
**US-A- 3 648 754**

- **PATENT ABSTRACTS OF JAPAN vol. 12, no. 297
  (C-519) (3144) 12 Août 1988 & JP-A-63 065 907
  (SANYO SEIKO K.K.) 24 Mars 1988**
- **PATENT ABSTRACTS OF JAPAN vol. 2, no. 136
  (C-78) (2957) 11 Novembre 1978 & JP-A-53 102
  282 (UNITIKA K.K.)**

Printed by Rank Xerox (UK) Business Services
2.14.6/3.4

## Description

La présente invention concerne un dispositif et un procédé permettant d'effectuer la séparation ou filtration d'une phase continue contenant une phase dispersée.

Les procédés de séparation utilisant les techniques de filtration sont très répandus dans l'industrie alimentaire, pharmaceutique, biomédicale et de traitement d'eau. Une telle séparation fait intervenir la taille des particules de phase dispersée et autorise une séparation des phases extrêmement poussée. Un des domaines d'application importants concerne la séparation de deux phases liquides en émulsion.

Le développement de ce type de procédé est cependant freiné et son extension à d'autres types d'industrie, telle que l'industrie pétrolière, limitée, du fait de problèmes d'entretien et de capacité de traitement. En effet lors de la séparation, deux phénomènes réduisent le flux traversant la membrane de séparation : la polarisation de concentration qui se traduit par une formation réversible d'une couche de phase dispersée au voisinage de la surface membranaire et le colmatage de la membrane, qui peut être partiellement irréversible, résultant d'un phénomène de bouchage des pores. Ces deux phénomènes provoquent un colmatage de la membrane, qui entraîne une diminution du flux passant à travers la membrane et donc de la capacité de traitement des unités de séparation.

Dans la suite de la description on définit le perméat comme étant la fraction du mélange qui traverse une paroi filtrante alors que les termes "rétentat" ou "concentrat" correspondent à la fraction qui est arrêtée par la paroi filtrante. De la même façon on définit par le terme "paroi filtrante" ou "paroi de filtration", une paroi poreuse permettant de réaliser la filtration sélective et par "paroi pleine" une paroi constituée d'un matériau homogène imperméable aux fluides considérés.

On définit par le terme "membrane" une paroi filtrante comportant en surface une couche sélective microporeuse et qui peut être disposée sur un support macroporeux et/ou une grille pour en assurer la tenue mécanique.

L'art antérieur décrit plusieurs sortes de dispositifs conçus pour limiter le colmatage des membranes de séparation.

Ainsi, un des premiers efforts pour améliorer les dispositifs existants porte sur la struture des membranes dont la taille des pores est nettement inférieure à celle des particules ou des gouttes à retenir dans le concentrat et qui, si la phase dispersée est liquide, sont choisies de façon à ne pas mouiller la phase dispersée. D'autres améliorations proposées consistent à réaliser des dispositifs de séparation comprenant des systèmes de contrepression périodique et de lavage chimique ponctuel permettant l'évacuation des particules amalgamées sur la surface membranaire.

Une autre façon de réduire l'accumulation de phase dispersée proche de la paroi est d'augmenter le cisaillement ou la turbulence sur la surface membranaire, par exemple en effectuant une filtration tangentielle au lieu d'une filtration frontale. On peut aussi augmenter le cisaillement tangentiel par accroissement de la vitesse de circulation du mélange ; cette façon de procéder présente cependant l'inconvénient de réduire le temps de résidence moyen du mélange dans le dispositif et en conséquence le débit du perméat. On remédie à cet inconvénient en faisant recirculer une partie du concentrat, ce qui conduit à une augmentation des coûts.

Les brevets SU-A-1604441 et SU-A-521902 décrivent des dispositifs de filtration tangentielle pour lesquels le cisaillement à la paroi est accentué par un écoulement hélicoïdal du mélange passant par plusieurs canaux. Le fait d'utiliser plusieurs canaux parallèles présente néanmoins l'inconvénient de diminuer la vitesse linéaire de passage du mélange, pour un même débit, ce qui conduit à diminuer le cisaillement à la paroi et donc d'augmenter l'accumulation de phase dispersée proche de la paroi.

Dans le brevet JP-A-53102282, on utilise l'action de la force centrifuge sur une poudre mélangée dans le concentrat pour nettoyer de façon mécanique et en continu la surface membranaire. Ce procédé entraîne une étape supplémentaire pour séparer la poudre du rétentat.

Les brevets US-A-3400074 et US-A-3840121 concernent des dispositifs de filtration dynamique dans lesquels la surface membranaire est mise en rotation ou en vibration de façon à décoller les particules agglomérées sur la membrane. Ces dispositifs présentent l'inconvénient de mettre en oeuvre des pièces mécaniques en mouvement, tout en présentant une efficacité limitée.

L'objet de la présente invention est de remédier aux inconvénients précédemment cités en offrant un dispositif qui permet, dans son principe de base, de réaliser une filtration de type statique par un procédé plus efficace que ceux connus dans l'art antérieur et qui ne nécessite pas de conditions particulières au niveau des propriétés que doit posséder le mélange à traiter.

La présente invention concerne un dispositif de séparation d'un mélange comprenant au moins une phase continue I et au moins une phase dispersée II, l'une des phases étant une phase dite légère, et l'autre phase une phase dite lourde, comportant des moyens de canalisation d'un courant du mélange adaptés à lui communiquer un mouvement hélicoïdal le long d'un axe central, et des moyens de filtration, le mouvement conduisant à un déplacement différencié de la phase légère et de la phase lourde sous l'action de la force centrifuge au cours duquel la phase continue I passe au moins partiellement à travers lesdits moyens de filtration, les moyens de canalisation comportant une pièce ayant une forme hélicoïdale et les moyens de filtration étant formés d'une paroi filtrante, caractérisé en ce que la pièce hélicoïdale et la paroi filtrante définissent un passage hélicoïdal dont la section décroît progressivement, tout au long du passage, suivant le sens de l'écoulement du mélange.

Les moyens de canalisation comportent, par exemple, au moins une paroi pleine et au moins une pièce interne de forme hélicoïdale et les moyens de filtration comprennent au moins une paroi filtrante, ladite paroi pleine et ladite paroi filtrante présentant toutes deux une symétrie de révolution autour de l'axe central, et la pièce hélicoïdale étant située, par exemple, entre la paroi pleine et la paroi filtrante.

Quand la phase continue est la phase dite lourde, la paroi filtrante est disposée vers l'extérieur de la pièce interne hélicoïdale et la paroi pleine vers l'intérieur, ladite paroi pleine étant constituée, par exemple, par l'axe de ladite pièce interne hélicoïdale.

Quand la phase continue est la phase dite légère, la paroi filtrante est disposée vers l'intérieur de la pièce interne de forme hélicoïdale et la paroi pleine vers l'extérieur.

La réduction progressive de la section du passage hélicoïdal peut être, par exemple, obtenue par une réduction du pas de la pièce hélicoïdale.

La décroissance de la section de passage peut être également obtenue par une variation progressive de la section transversale de la paroi pleine.

Le dispositif peut aussi être adapté à effectuer une double séparation d'un mélange. Dans ce cas, les moyens de canalisation comportent alors, par exemple, une paroi pleine tronconique, et une paroi pleine extérieure cylindrique, lesdites parois étant coaxiales et lesdits moyens de filtration comportant une première paroi filtrante, constitués d'une grille située à l'intérieur de la paroi pleine tronconique et d'une deuxième paroi filtrante située à l'extérieur de la paroi pleine tronconique et à l'intérieur de la paroi pleine cylindrique.

La pièce hélicoïdale et la paroi filtrante peuvent être solidaires et libres en rotation.

Le dispositif peut comporter des moyens d'entraînement en rotation de la pièce interne de forme hélicoïdale par rapport à la paroi filtrante et comporter des moyens mécaniques favorisant le décolmatage de la paroi filtrante tels que des balais ou des racleurs.

La paroi filtrante peut être constituée d'un matériau préférentiellement mouillable par la phase continue.

La paroi filtrante peut être une membrane comportant par exemple des pores de diamètre compris entre 0,01 et 10 micromètres.

La présente invention concerne aussi un procédé de séparation d'un mélange comportant au moins une phase continue I et au moins une phase dispersée II, l'une des phases étant une phase dite lourde et l'autre une phase dite légère. Il est caractérisé en ce que l'on introduit le mélange à séparer dans un dispositif précédemment mentionnées de façon que l'écoulement desdites phases I et II le long dudit passage provoque un mouvement de rotation conduisant à un déplacement différencié de la phase légère et de la phase lourde au cours duquel la phase continue I passe au moins partiellement à travers la paroi filtrante.

De cette façon, la vitesse du mélange reste suffisamment élevée au cours de la séparation.

Le procédé et le dispositif peuvent être avantageusement utilisés à la séparation d'un mélange formé par deux phases liquides.

On peut aussi l'appliquer à un mélange formé par une phase liquide aqueuse et au moins une phase liquide organique.

On peut aussi, à l'aide du procédé selon l'invention, séparer un mélange pour lequel la phase continue comporte une phase gazeuse.

Le mélange peut aussi comporter une phase dispersée comprenant une phase gazeuse, ou au moins une phase solide.

L'agencement relatif des éléments de la présente invention permet d'obtenir :

- une réduction de la polarisation et/ou du colmatage de la paroi filtrante ou membrane du fait de l'existence d'une force centrifuge dont la direction est perpendiculaire à la paroi et de sens opposé à celui du flux membranaire de perméat.
- une vitesse de circulation du rétentat élevée et constante sur toute la paroi filtrante par la variation de la section de passage.
- si cela s'avère nécessaire, la possibilité d'effectuer un décolmatage mécanique en continu de la paroi filtrante par raclage ou balayage.

D'autres caractéristiques et avantages de la présente invention apparaîtront mieux à la lecture de la description ci-après en se référant aux figures annexées pour lesquelles :

- les figures 1, 2 montrent un dispositif de filtration sans pièces en mouvement pour lequel la surface hélicoïdale a un pas d'hélice variable
- les figures 3, 4, 5 montrent une variante du dispositif des figures 1, 2 pour laquelle la surface hélicoïdale a un pas d'hélice constant, et la surface pleine une section variable ;
- les figures 6 à 8 montrent un exemple de réalisation de l'invention dans lequel l'ensemble de la membrane de filtration, de la surface pleine et de la surface hélicoïdale est entraîné en rotation ; et
- les figures 9 à 11 représentent un mode de réalisation d'un dispositif selon l'invention pour lequel la pièce hélicoïdale est entraînée en mouvement relatif par rapport à la membrane

Le dispositif qui va être décrit ci-après, permet de séparer un mélange comportant une phase continue I et une phase dispersée II par passage au travers d'une paroi de filtration, telle qu'une membrane, l'une des phases étant dite phase légère et l'autre phase dite phase lourde, et il est conçu pour que le mélange à séparer ou à filtrer soit mis en rotation et que la force centrifuge ainsi créée provoque un mouvement différencié de la phase légère et de la phase lourde et que la phase continue passe au moins partiellement à travers la paroi filtrante.

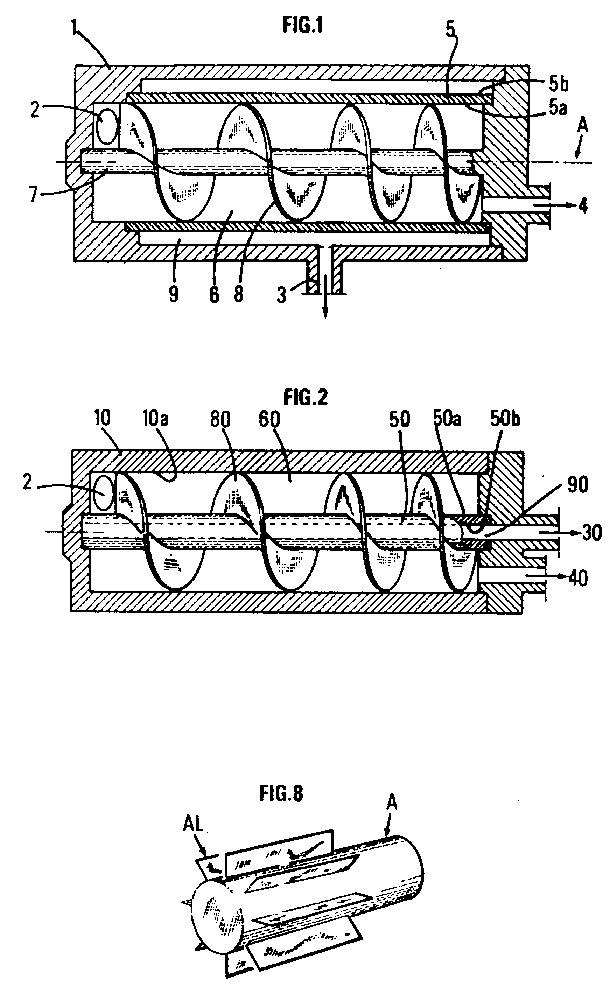

Le dispositif de la figure 1 est adapté à la séparation d'un mélange dans lequel la phase dispersée II est la phase la plus légère, la phase continue I étant la phase la plus lourde. Il comporte une enceinte 1 sensiblement cylindrique dans laquelle est disposée une paroi de filtration sensiblement cylindrique coaxiale 5, telle qu'une membrane, délimitée par deux surfaces interne 5a et externe 5b, des conduits d'introduction 2 du mélange et d'évacuation 3, 4 respectivement du perméat et du rétentat du mélange à séparer.

Dans l'espace annulaire 6 créé par la surface interne 5a, on dispose une pièce interne coaxiale 7 formant un axe A solidaire de l'enceinte 1, et une pièce hélicoïdale 8 solidaire de la pièce 7.

La surface externe 5b et la face interne de l'enceinte 1 délimitent un espace annulaire 9 dans lequel est collecté le perméat qui est ensuite évacué par le conduit d'évacuation 3.

Le rétentat est collecté dans l'espace annulaire 6 et évacué par le conduit 4.

Une des possibilités d'utilisation du dispositif consiste à introduire le mélange à séparer comprenant la phase continue I et la phase dispersée II par le conduit 2. Le mélange est guidé en rotation du fait de son écoulement le long de la pièce hélicoïdale 8. Les particules de phase légère, en raison du mouvement de rotation ainsi créé, restent plus proches de l'axe A, ce qui évite un colmatage des pores de la membrane, alors qu'au contraire, la phase continue plus lourde traverse la membrane. Au fur et à mesure de sa progression dans le dispositif, le mélange comportant les deux phases I et II s'appauvrit en phase continue I, le perméat traversant la membrane 5 pour être collecté dans l'espace 9 et évacué par le conduit 3, alors que la concentration de la phase dispersée dans le mélange restant, augmente au fur et à mesure de son écoulement le long de la pièce hélicoïdale, et de l'espace annulaire 6 avant d'être évacué par le conduit 4 (rétentat).

La circulation du mélange selon un mouvement hélicoïdal permet de réduire la polarisation de concentration et/ou le colmatage de la membrane, d'une part par un effet de cisaillement et d'autre part, par un effet de centrifugation, qui tend à entraîner la phase dispersée dans une direction différente de celle du flux transmembranaire de perméat.

Pour que ces deux effets puissent s'exercer pleinement tout au long de l'écoulement, il est nécessaire, tout au long de celui-ci, de maintenir la vitesse de circulation constante, ou tout du moins suffisamment élevée. Si la section de passage hélicoïdale reste constante, cette vitesse diminue, du fait de la diminution progressive du débit de mélange liée au passage de perméat à travers la membrane.

On utilise pour cela, de préférence, une pièce hélicoïdale 8 dont le pas et du même coup la section de passage sont réduits progressivement.

La réduction du pas $p(i)$ de la spire $i$ d'une pièce hélicoïdale constituée de $n$ spires, est choisi, de préférence, égal à :

$$p(i) = p(o) * \left( 1 - \frac{P(i)}{Q(o)} \right)$$

avec :

$p(o)$ : pas de la première spire prise en considération (en m)
$p(i)$ : pas de la spire $i$
$Q(o)$ : débit d'entrée (en $m^3/h$ )
$Q(i)$ : débit de concentrat sortant de la spire $i$

$$P(i) = \sum_{j=o}^{i} Q(i-1) - Q(i)$$

débit de perméat recueilli par les $i$ premières spires (en $m^3/h$ )

Si le flux $F$ (en $m^3/m^2/h$) de perméat peut être considéré constant sur l'ensemble des spires, $L$ étant la circonférence de la membrane, cette relation peut s'expliciter de la façon suivante :

$$p(i) = \frac{p(o)}{\left( \frac{p(o)*F*L}{Q(o)} + 1 \right)^i}$$

Au fur et à mesure que le rétentat se concentre en phase dispersée, la paroi filtrante est plus susceptible de se colmater. Pour éviter une diminution du flux dans cette zone, il est possible de réduire le pas des spires correspondantes et, par suite, d'augmenter localement la vitesse de circulation du perméat et le cisaillement à la paroi.

Un tel dispositif s'applique en particulier à la séparation d'une émulsion formée par deux phases liquides, la phase la plus légère formant la phase dispersée. Il s'applique, par exemple, à la séparation d'une émulsion d'huile dans l'eau. L'huile forme alors la phase II dispersée et l'eau, la phase I continue.

La figure 2 représente une variante du dispositif selon l'invention adaptée à séparer un mélange dans lequel la phase dispersée II est la phase la plus lourde, la phase continue I étant la phase la plus légère.

Le dispositif comporte une enceinte 10 sensiblement cylindrique pourvue de conduits d'introduction 2 du mélange et d'évacuation 30, 40 respectivement du perméat et du rétentat, du mélange à séparer, dans laquelle est disposée une membrane coaxiale tubulaire 50 présentant deux surfaces externe 50a et interne 50b.

La surface externe 50a de la membrane 50 et la surface interne 10a de l'enceinte 10 délimitent un espace annulaire 60 dans lequel on dispose une pièce hélicoïdale 80.

La surface interne 50b délimite un espace central 90, dans lequel on collecte le perméat avant de l'évacuer par le conduit 30.

Le procédé selon l'invention peut être mis en oeuvre de la façon suivante : on introduit le mélange constitué de la phase dispersée et de la phase continue à séparer dans l'enceinte 10 par le conduit d'introduction 2. Le mélange est guidé en rotation du fait de son écoulement le long de la pièce hélicoïdale 80 et les particules de phase lourde soumises à une force centrifuge en raison du mouvement de rotation ainsi créé, s'écartent de la membrane, ce qui évite le colmatage progressif des pores de la membrane alors que la phase continue légère traverse la membrane. Au fur et à mesure de sa progression dans le dispositif le mélange comprenant les deux phases s'appauvrit en phase continue I qui traverse la membrane et qui est collectée dans l'espace central 90 et évacuée par le conduit 30, alors que la partie restante du mélange se concentre en phase dispersée au fur et à mesure de son écoulement le long de la pièce hélicoïdale pour être ensuite évacuée par le conduit 40.

De même que pour le dispositif décrit à la figure 1, on optimise les deux effets de cisaillement et de centrifugation en utilisant une pièce hélicoïdale 80 dont le pas est réduit de façon progressive ce qui permet le maintien de la vitesse de circulation à une valeur constante.

Un tel dispositif s'applique en particulier à la séparation d'une émulsion formée par deux phases liquides, la phase la plus lourde formant la phase dispersée. Il s'applique, par exemple, à la séparation d'une émulsion d'eau dans l'huile. L'huile forme alors la phase I continue et l'eau, la phase II dispersée.

Le conduit d'introduction 2 du mélange à séparer dans l'enceinte 1, 10 est situé de préférence à une des extrémités de l'enceinte alors que le conduit d'évacuation du rétentat 4, 40 est situé à l'extrémité opposée.

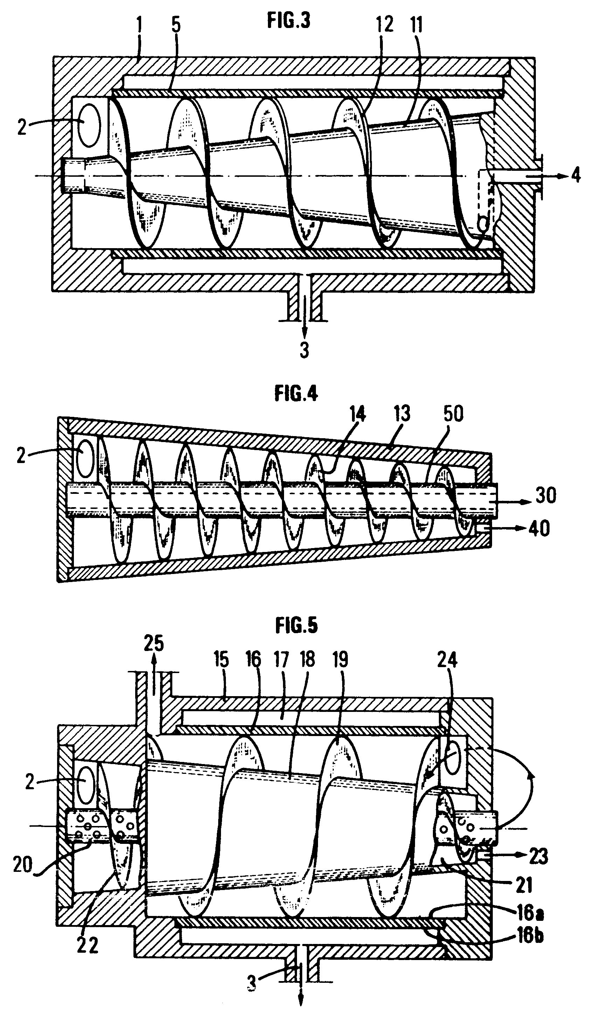

Une autre façon de maintenir une vitesse de circulation du mélange constante durant son écoulement le long de la pièce interne hélicoïdale équipant le dispositif de séparation, est décrite, en relation avec les exemples de réalisation représentés, sur les figures 3, 4, 5. La réduction de la section de passage hélicoïdale est obtenue, dans ce cas, par une réduction progressive de l'écart entre les diamètres extérieur et intérieur de la section de passage hélicoïdale.

Le dispositif schématisé sur la figure 3 est plus particulièrement adapté à la séparation d'un mélange comportant une phase dispersée relativement légère et une phase continue qui est la phase la plus lourde. Il comporte aussi une enceinte cylindrique 1, une membrane de filtration 5 également cylindrique et, à l'intérieur de celle-ci, une pièce 11 de forme tronconique dont la base se situe à l'extrémité de l'enceinte opposée au conduit d'introduction 2 du mélange, une pièce hélicoïdale 12 à pas d'hélice constant dont le diamètre extérieur est sensiblement égal à celui de la paroi de filtration, disposée entre la pièce tronconique 11 et la paroi de filtration.

Un conduit d'évacuation 4 du rétentat traverse de préférence dans sa partie centrale, la base du cône 11 et débouche dans une zone de passage comprise entre la pièce tronconique et la paroi de filtration.

Lorsque l'on introduit le mélange comportant les deux phases à séparer, les gouttes de phase légère sont rassemblées autour de la pièce 11, la vitesse de circulation du mélange restant sensiblement constante, et suffisamment élevée, pendant toute la durée de la séparation du fait de la forme conique de la pièce centrale 11.

Le dispositif de la figure 4 est une variante du dispositif représenté sur la figure 3, adaptée à la séparation d'un mélange pour lequel, la phase dispersée est la phase la plus lourde, alors que la phase continue est la phase la plus légère.

La réduction de la section de passage hélicoïdale est obtenue dans ce cas, au moyen d'une pièce creuse 13 jouant le rôle d'enceinte, dont la section intérieure va en diminuant de façon progressive depuis une première extrémité où débouche le conduit d'introduction 2 vers son extrémité opposée. Comme dans le mode de réalisation de la figure 2, la membrane 50 est disposée suivant l'axe de l'enceinte. Entre la membrane et l'enceinte 13, est disposée également une pièce hélicoïdale 14 dont le pas est, par exemple, sensiblement constant le long du conduit de circulation. Sa section extérieure est adaptée à celle de l'enceinte 13 et diminue donc progressivement suivant le sens d'écoulement du mélange à séparer.

La section intérieure de l'enceinte 13 est de préférence tronconique, les conduits d'évacuation du rétentat 40 et du perméat 30 étant placés au niveau de la plus petite section transversale qui constitue ainsi la section d'évacuation.

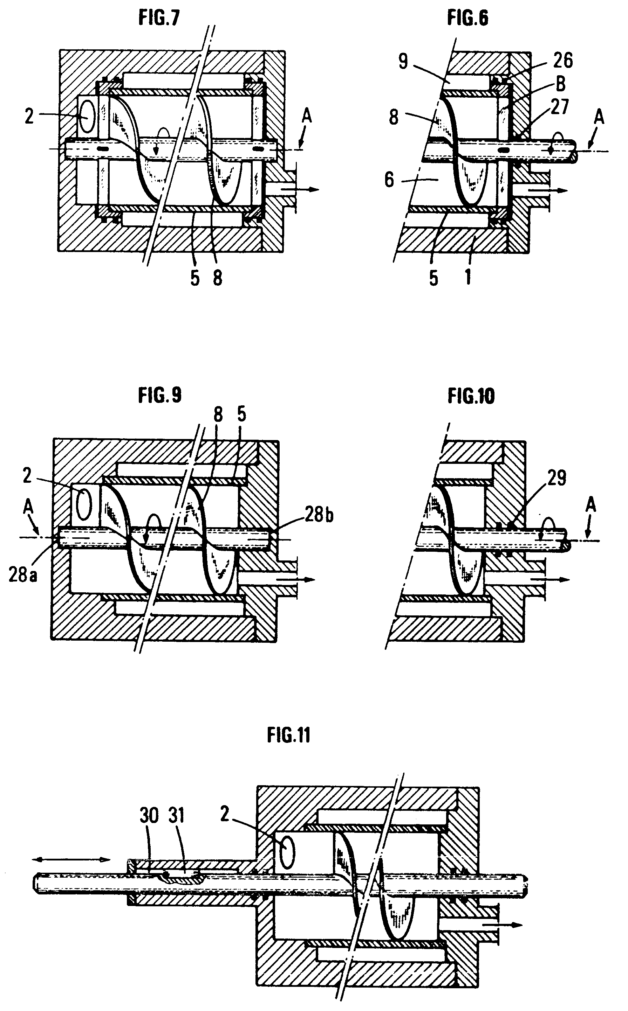

La figure 5 représente un mode d'arrangement particulier de l'invention à deux étages de filtration adapté plus particulièrement à la séparation d'un mélange comportant trois phases pour lesquelles, les phases dispersées II et III sont respectivement plus lourdes et plus légères que la phase continue I.

Ce mode de réalisation convient particulièrement bien pour séparer de l'eau huileuse chargée en particules solides.

Le dispositif dans ce cas, résulte de la combinaison des dispositifs décrits par les figures 3 et 4, et comprend deux étages de filtration successifs. Le dispositif comporte une enceinte cylindrique 15 dans laquelle on dispose une membrane 16 coaxiale, dont la surface interne 16a est préférentiellement mouillable par la phase aqueuse du mélange à séparer.

La surface externe 16b de la membrane 16 et la surface interne de l'enceinte 15 délimitent un espace annulaire 17 dans lequel est collecté le perméat qui est ensuite évacué par un conduit radial 3.

Dans l'espace de l'enceinte 15 intérieur à la membrane 16, est disposée une pièce tronconique 18. La section de cette pièce 18 va en diminuant depuis une première extrémité de l'enceinte 15 jusqu'à son extrémité opposée. Entre la membrane 16 et cette pièce 18, on dispose une pièce hélicoïdale 19 dont le pas de l'hélice est, de préférence constant et dont la section extérieure est adaptée à la section intérieure de la membrane 16.

A l'intérieur de la pièce pleine 18, et suivant son axe, on dispose un tube perforé 20, constitué, par exemple, d'une grille.

La surface interne de la pièce tronconique 18 et la surface externe du tube perforé 20 délimitent un espace annulaire 21, dans lequel se trouve une pièce hélicoïdale 22, disposée de préférence de manière coaxiale et présentant un pas constant. La section extérieure de cette pièce hélicoïdale 22 est adaptée à la section décroissante de l'espace annulaire 21.

Le mélange comportant les différentes phases à séparer, est introduit à l'intérieur de la pièce 18 par un conduit 2 puis guidé en rotation du fait de son écoulement le long de la surface hélicoïdale 22. Les particules solides se rassemblent sous l'effet de la force centrifuge le long de la pièce pleine 18 avant d'être évacuées par un conduit 23 situé, par exemple, à la deuxième extrémité de l'enceinte. Elles restent ainsi à l'écart de la grille 20, ce qui évite un colmatage progressif de celle-ci. Les phases liquides, plus légères, traversent la grille 20 et sont réintroduites de manière tangentielle par un conduit 24 dans la deuxième section de filtration, dite section de filtration secondaire, définie par la pièce hélicoïdale 19, la membrane 16 et la pièce 18. Peu sollicitées par la force centrifuge, les gouttes liquides les plus légères restent proches de la surface pleine 18, évitant ainsi une polarisation et/ou un colmatage progressif des pores de la membrane 16. La phase liquide plus lourde au contraire traverse la membrane 16 et est évacuée par le conduit 3. La pièce 18 a plus particulièrement pour effet de maintenir constante une vitesse de circulation du mélange à séparer durant son écoulement le long de l'axe du dispositif. Par suite, le cisaillement à la paroi demeure élevé sur l'ensemble de la surface membranaire. Le concentrat est évacué par le conduit 25 et le perméat par le conduit 3.

Les dispositifs représentés sur les figures 1 à 6 sont caractérisés en ce qu'ils ne comportent aucune pièce en mouvement. La force centrifuge qui s'exerce sur le mélange est due à la circulation du mélange entraîné en rotation le long de la pièce hélicoïdale. Au contact de la paroi filtrante immobile, la vitesse tangentielle du fluide s'annule. Dans cette partie du fluide, la force centrifuge est négligeable et le cisaillement est important.

Les modes de réalisation des figures 6 et 7 obtenus par modification du dispositif de la figure 3, comportent un moyen de diminuer le cisaillement à la paroi et de réduire les pertes de charge, tout en évitant la formation d'une couche de polarisation de la membrane.

Le mode de réalisation de la figure 6 est obtenu en rendant la membrane 5, la pièce hélicoïdale 8 et l'axe A, solidaires et libres en rotation par rapport à l'enceinte 1. L'axe A peut être entraîné en rotation par un moteur, et communique son mouvement de rotation à la membrane 5. L'axe A est relié à la membrane 5 par des moyens de fixation tels que des bras B placés au voisinage des deux extrémités de l'enceinte 1. L'espace annulaire 6 de collecte du concentrat et l'espace annulaire 9 de collecte du perméat sont isolés l'un de l'autre par au moins un joint étanche 26. L'étanchéité de la sortie de l'arbre A est assurée par un joint étanche 27. Le sens de rotation de l'axe A est, de préférence, identique à celui de circulation du mélange dans la pièce hélicoïdale 8.

Les particules de phase légère déposées sur la membrane acquièrent une vitesse angulaire et sont soumises à une force centrifuge perpendiculaire à la membrane en sens contraire à celui du flux transmembranaire de perméat. De manière générale, toutes les particules de phase dispersée ont une vitesse tangentielle due à leur déplacement dans la pièce hélicoïdale augmentée de la valeur de la vitesse de rotation de l'axe A, et sont donc soumises à une accélération centrifuge plus importante que dans le cas d'un dispositif statique.

Le même principe peut être mis en oeuvre en laissant l'axe A, la membrane 5 et la pièce hélicoïdale 8 tourner en libre rotation sous l'effet de la circulation du mélange. Cette alternative illustrée figure 7, présente l'avantage de ne pas utiliser de moyen d'entraînement mécanique extérieur. Dans le cas de faible débit ou de frottements importants l'axe A est, par exemple, pourvu d'ailettes longitudinales AL (figure 8).

Les modes de réalisation représentés sur les figures 9 à 12 se distinguent essentiellement en ce que la pièce hélicoïdale 8 et la membrane 5 sont animées d'un mouvement relatif.

L'axe A (Fig. 9), solidaire de la pièce hélicoïdale 8, est guidé en rotation par des logements 28a et 28b qui assurent de plus le centrage. On peut améliorer la rotation en utilisant des roulements. Dans ce mode de réalisation, la pièce pleine 7 et la pièce 8 sont entraînés en libre rotation sous l'effet de l'écoulement du mélange (figure 9).

On peut aussi utiliser (Fig. 10) des moyens d'entraînement mécanique extérieurs (non représentés) pour mettre l'axe A en mouvement de rotation, dans ce cas, la vitesse de rotation de l'axe A est choisie en fonction de la fréquence de balayage souhaitée de la partie périphérique de la pièce hélicoïdale 8 sur la surface interne 5b de la membrane 5. Des joints 29 assurent l'étanchéité de la sortie de l'arbre A. Le sens de rotation de l'axe A, indiqué par la flèche sur la figure, est fixé par les conditions de pompage du mélange à séparer. Le contact entre la périphérie de la pièce hélicoïdale 8 et la membrane 5 est relativement étroit pour éviter les fuites du mélange comportant les deux phases I et II entre spires adjacentes. Le décolmatage de la membrane est ainsi réalisé en continu par le déplacement axial de l'extrémité de la pièce hélicoïdale qui balaye la surface située en contact avec elle.

Afin d'améliorer le décolmatage de la membrane, la pièce hélicoïdale est pourvue par exemple à sa périphérie de moyens mécaniques tels que des balais ou racleurs permettant d'améliorer le décolmatage de la membrane.

Suivant le mode de réalisation de la figure 11, on peut encore communiquer à la pièce pleine 7 correspondant à l'axe A un mouvement de translation alternatif. Dans ce cas, le dispositif comporte une rainure 30 dans laquelle coulisse une clavette 31, la clavette jouant le rôle de butée. Cette alternative permet un décolmatage ponctuel manuel ou automatique de la membrane.

Les agencements précédents permettent d'assurer le décolmatage mécanique de la membrane immobile par le déplacement axial de la partie périphérique de la pièce hélicoïdale 8 sur la membrane et la destabilisation de la couche de polarisation.

Les caractéristiques des membranes telles que la mouillabilité, l'épaisseur, la taille des pores, la composition sont bien connues de l'homme de l'art et sont choisies en fonction du mélange comportant les deux phases à séparer. Ainsi, il est préférable dans le cas de filtration de liquides non miscibles que les membranes 5, 50 ne soient pas mouillables par la phase dispersée. Selon la granulométrie de la phase dispersée, la taille des pores de la membrane est comprise, par exemple, entre 0.01 et 10 micromètres et peut être très voisine de la taille des particules sans risquer un colmatage progressif de la membrane. Cette taille de pores est plus particulièrement adaptée à la séparation d'une émulsion. Il est également possible, sans sortir du cadre de l'invention d'utiliser des membranes dont la taille de pores est comprise, par exemple entre 0.001 et 0.01 micromètre, pour séparer des particules plus fines. La membrane peut présenter une structure assymétrique comportant une peau très fine homogène de 0.1 à 0.5 micromètres d'épaisseur et une sous-couche de 100 à 200 micromètres d'épaisseur de texture beaucoup plus poreuse, déposée sur un support macroporeux lui assurant une bonne résistance mécanique. La membrane peut être constituée d'un matériau polymère synthétique tel que le polysulfone, polyacrylonitrile, polyamide, ou d'un matériau minéral formé par exemple par frittage de particules de carbone, d'oxyde d'aluminium, ou de dioxyde de zirconium.

Dans tous les modes de réalisation précédemment décrits, le conduit d'introduction 2 du mélange est, de préférence disposé de manière tangentielle par rapport à la section circulaire de l'enceinte dans laquelle le mélange est introduit. Ceci permet de favoriser la mise en rotation du mélange autour de l'axe du dispositif.

On ne sortirait pas du cadre de l'invention en multipliant le nombre de passages hélicoïdaux, par exemple en disposant une pluralité de pièces hélicoïdales coaxiales dont le pas est constant ou variable.

On ne sortirait pas du cadre de l'invention si la pièce interne hélicoïdale était dépourvue d'un axe central.

On ne sortirait pas du cadre de l'invention en associant un nombre quelconque de dispositifs selon l'invention. Il est possible par exemple de les associer en parallèle, le débit de mélange traité étant réparti entre les différents dispositifs ou encore en série, le rétentat sortant d'un dispositif étant envoyé à un autre dispositif pour assurer un complément de traitement.

**Revendications**

1. Dispositif de séparation d'un mélange comprenant au moins une phase continue I et au moins une phase dispersée II, l'une des phases étant une phase dite légère et l'autre phase une phase dite lourde, comportant des moyens de canalisation (8) d'un courant dudit mélange adaptés à lui communiquer un mouvement hélicoïdal le long d'un axe central (A) et des moyens de filtration (5), le mouvement conduisant à un déplacement radial différencié de la phase légère et de la phase lourde sous l'action de la force centrifuge au cours duquel la phase continue I passe au moins partiellement à travers lesdits moyens de filtration (5), lesdits moyens de canalisation (8) comportant une pièce (8) ayant une forme hélicoïdale et lesdits moyens de filtration étant formés d'une paroi filtrante (5), caractérisé en ce que ladite pièce hélicoïdale et la paroi filtrante définissent un passage hélicoïdal dont la section décroît progressivement, tout au long du passage, suivant le sens de l'écoulement du mélange.

2. Dispositif selon la revendication 1, caractérisé en ce que les moyens de canalisation comportent au moins une paroi pleine (7) et au moins une pièce interne de forme hélicoïdale (8), les moyens de filtration (5) comportent au moins une paroi filtrante, ladite paroi pleine et ladite paroi filtrante présentant toutes deux une symétrie de révolution autour de l'axe central, et ladite pièce hélicoïdale étant située entre ladite paroi pleine et ladite paroi filtrante.

3. Dispositif selon la revendication 2, caractérisé en ce que ladite phase continue étant la phase dite lourde, la paroi filtrante (5) est disposée vers l'extérieur de ladite pièce interne hélicoïdale (8) et la paroi pleine (7) vers l'intérieur, ladite paroi pleine étant constituée, par exemple par l'axe de ladite pièce interne hélicoïdale.

4. Dispositif selon la revendication 2, caractérisé en ce que la phase continue étant la phase dite légère, la paroi filtrante (5) est disposée vers l'intérieur de ladite pièce interne (8) de forme hélicoïdale, et la paroi pleine (7) vers l'extérieur.

5. Dispositif selon la revendication 2, caractérisé en ce que la réduction progressive de la section de passage hélicoïdal est obtenue par une réduction du pas de la pièce hélicoïdale (8).

6. Dispositif selon la revendication 2, caractérisé en ce que la section transversale de la paroi pleine varie progressivement de façon à obtenir un passage hélicoïdal de section décroissante.

7. Dispositif selon la revendication 2, caractérisé en ce que les moyens de canalisation comportent une paroi pleine tronconique, et une paroi pleine extérieure cylindrique, lesdites parois étant coaxiales et lesdits moyens de filtration comportant une première paroi filtrante constitués d'une grille située à l'intérieur de la paroi pleine tronconique et d'une deuxième paroi filtrante située à l'extérieur de la paroi pleine tronconique et à l'intérieur de la paroi pleine cylindrique.

8. Dispositif selon la revendication 2, caractérisé en ce que la pièce hélicoïdale et la paroi filtrante sont solidaires et libres en rotation.

9. Dispositif selon la revendication 2, caractérisé en ce qu'il comporte des moyens d'entraînement en rotation de la pièce interne de forme hélicoïdale par rapport à la paroi filtrante et comporte des moyens mécaniques favorisant le décolmatage de la paroi filtrante, tels que des balais ou des racleurs.

10. Dispositif selon l'une des revendications 1 à 9, caractérisé en ce que la paroi filtrante est constituée d'un matériau préférentiellement mouillable par la phase continue.

11. Dispositif selon l'une des revendications 1 à 10, caractérisé en ce que la paroi filtrante est constituée d'une membrane comportant des pores de diamètre compris entre 0,01 et 10 micromètres.

12. Méthode de séparation d'un mélange comprenant au moins une phase continue I et au moins une phase dispersée II, l'une des phases étant une phase dite légère et l'autre phase une phase dite lourde, caractérisée en ce que l'on introduit ledit mélange à séparer dans le passage du dispositif selon la revendication 1 de façon que l'écoulement desdites phases I et II le long dudit passage provoque un mouvement de rotation conduisant à un déplacement différencié de la phase légère et de la phase lourde et que la phase continue I passe au moins partiellement à travers la paroi filtrante.

13. Application du dispositif selon l'une des revendications 1 à 11 ou de la méthode selon la revendication 12, à la séparation d'un mélange formé par deux phases liquides.

14. Application selon la revendication 13, dans laquelle le mélange est formé par une phase liquide aqueuse et au moins une phase liquide organique.

15. Application du dispositif selon l'une des revendications 1 à 10 ou de la méthode selon la revendication 12, à la séparation d'un mélange pour lequel la phase dispersée comporte une phase gazeuse.

16. Application du dispositif selon l'une des revendications 1 à 11 ou revendication 12, à la séparation d'un mélange pour lequel la phase dispersée comporte au moins une phase solide.

17. Application du dispositif selon l'une des revendications 1 à 10 ou revendication 12, à la séparation d'un mélange pour lequel la phase continue I comporte une phase gazeuse.

## Claims

1. A device for separating a mixture consisting of at least one continuous phase I and at least one disperse phase II, one of the phases being what is referred to as the light phase and the other phase being the heavy phase, comprising means for channelling (8) a flow of the said mixture designed to impart a helical movement thereto along a central shaft (A) and filtering means (5), this movement causing the light phase and the heavy phase to move differently in the radial direction under the effect of the centrifugal force so that at least some of the continuous phase I passes through the said filtering means (5), the said channelling means (8) having a helically-shaped member (8) and the said filtering means being a filtration wall, characterised in that the said helical member and the filtration wall define a helical passage whose section gradually decreases along the entire length of the passage in the direction in which the mixture is flowing.

2. A device as claimed in claim 1, characterised in that the channelling means comprise at least a solid wall (7) and at least a helically-shaped internal member (8), the filtration means (5) having at least one filtration wall, wherein the said solid wall and the said filtration wall are both symmetrical in rotation about the central axis and the said helical member is located between the said solid wall and the said filtration wall.

3. A device as claimed in claim 2, characterised in that if the said continuous phase is the heavy phase, the filtration wall (5) is arranged towards the exterior of the said internal helical member (8) and the solid wall (7) towards the interior, the said solid wall being for example the shaft of the said internal helical member.

4. A device as claimed in claim 2, characterised in that if the continuous phase is the light phase, the filtration wall (5) is located towards the interior of the said internal, helically-shaped member (8) and the solid wall (7) towards the exterior.

5. A device as claimed in claim 2, characterised in that the section of the helical passage is gradually decreased by reducing the pitch of the helical member (8).

**6.** A device as claimed in claim 2, characterised in that the cross-section of the solid wall gradually varies so as to produce a helical passage with a decreasing section.

**7.** A device as claimed in claim 2, characterised in that the channelling means comprise a solid wall of a truncated cone shape and an external cylindrical solid wall, the said walls being coaxial and the said filtration means having a first filtration wall in the form of a grid located inside the truncated cone-shaped solid wall and a second filtration wall located outside the truncated cone-shaped solid wall and inside the cylindrical solid wall.

**8.** A device as claimed in claim 2, characterised in that the helical member and the filtration wall are integral and free in rotation.

**9.** A device as claimed in claim 2, characterised in that it has means for driving the internal helical member in rotation relative to the filtration wall and has mechanical means to help unblock the filtration wall, such as wipers or scrapers.

**10.** A device as claimed in one of claims 1 to 9, characterised in that the filtration wall is made from a material that is preferably wettable by the continuous phase.

**11.** A device as claimed in one of claims 1 to 10, characterised in that the filtration wall is a membrane with pores of a diameter ranging between 0.01 and 10 micrometres.

**12.** A method of separating a mixture consisting of at least a continuous phase I and at least a disperse phase I, one of the phases being what is referred to as a light phase and the other phase being a heavy phase, characterised in that the said mixture to be separated is fed through the passage of the device as claimed in claim 1 so that the flow of the said phases I and II along the said passage induces a rotary movement causing the light phase and the phase to move differently and at least some of the continuous phase I passes through the filtration wall.

**13.** Application of the device as claimed in one of claims 1 to 11 or claim 12 to the process of separating a mixture comprising two liquid phases.

**14.** Application of the device as claimed in claim 13, in which the mixture is made up of an aqueous liquid phase and at least one organic liquid phase.

**15.** Application of the device as claimed in one of claims 1 to 10 or claim 12 to the method of separating a mixture in which the disperse phase contains a gaseous phase.

**16.** Application of the device as claimed in one of claims 1 to 11 or claim 12 to the separation of a mixture in which the disperse phase contains at least one solid phase.

**17.** Application of the device as claimed in one of claims 1 to 10 or 12 to the separation of a mixture in which the continuous phase I contains a gaseous phase.

**Patentansprüche**

**1.** Vorrichtung zur Trennung eines Gemisches, das wenigstens eine kontinuierliche Phase I und wenigstens eine dispergierte Phase II umfaßt, wobei eine der Phasen eine als leicht bezeichnete Phase und die andere Phase eine als schwer bezeichnete Phase ist, welche Mittel zum Kanalisieren (8) eines Stromes des Gemisches, die daran angepaßt sind, ihn auf eine schraubenförmige Bewegung längs einer Zentralachse (A) zu übertragen und Mittel zum Filtrieren (5) umfaßt, wobei die Bewegung zu einer differenzierten radialen Verschiebung der leichten Phase und der schweren Phase unter Wirkung der Zentrifugalkraft führt, im Verlauf deren die kontinuierliche Phase I wenigstens teilweise die Mittel zum Filtrieren (5) passiert, die Mittel zum Kanalisieren (8) ein Teil (8) mit einer schraubenförmigen Form umfassen und die Mittel zum Filtrieren aus einer filtrierenden Wandung (5) gebildet sind, dadurch gekennzeichnet, daß der schraubenförmige Teil und die filtrierende Wand einen schraubenförmigen Durchgang definieren, dessen abnehmender Abschnitt fortschreitend über die gesamte Länge des Durchganges der Fließrichtung des Gemisches folgt.

**2.** Vorrichtung nach Anspruch 1, dadurch gekennzeichnet, daß die Mittel zum Kanalisieren wenigstens eine undurchlässige Wandung (7) und wenigstens ein inneres Teil von schraubenförmiger Form (8) umfassen, die Mittel zum Filtrieren (5) wenigstens eine filtrierende Wandung umfassen, wobei die undurchlässige Wandung und die filtrierende Wandung beide eine Rotationssymmetrie um die Zentralachse zeigen und das schraubenförmige Teil zwischen der undurchlässigen Wandung und der filtrierenden Wandung angeordnet ist.

**3.** Vorrichtung nach Anspruch 2, dadurch gekennzeichnet, daß die kontinuierliche Phase die als schwer bezeichnete Phase ist, die filtrierende Wandung (5) zum Äußeren des schraubenförmigen internen Teiles (8) angeordnet ist und die undurchlässige Wandung (7) zum Inneren, wobei die undurchlässige Wandung beispielsweise durch die Achse des schraubenförmigen internen Teiles gebildet ist.

4. Vorrichtung nach Anspruch 2, dadurch gekennzeichnet, daß die kontinuierliche Phase die als leicht bezeichnete Phase ist, die filtrierende Wandung (5) zum Inneren des internen Teiles (8) von schraubenförmiger Form und die undurchlässige Wandung (7) zum Äußeren angeordnet ist.

5. Vorrichtung nach Anspruch 2, dadurch gekennzeichnet, daß die fortschreitende Verminderung des Abschnittes des schraubenförmigen Durchganges durch eine Verminderung der Ganghöhe des schraubenförmigen Teiles (8) erhalten wird.

6. Vorrichtung nach Anspruch 2, dadurch gekennzeichnet, daß der transversale Abschnitt der undurchlässigen Wandung fortschreitend variiert, um so einen schraubenförmigen Durchgang des abnehmenden Abschnittes zu erhalten.

7. Vorrichtung nach Anspruch 2, dadurch gekennzeichnet, daß die Mittel zum Kanalisieren eine kegelstumpfartige undurchlässige Wandung umfassen und eine zylindrische äußere undurchlässige Wandung umfassen, wobei die Wandungen koaxial verlaufen und die Mittel zum Filtrieren eine erste filtrierende Wandung, die aus einem im Inneren der kegelstumpfartigen undurchlässigen Wandung angeordneten Gitter besteht und einer zweiten filtrierenden Wandung, die außerhalb der kegelstumpfartigen undurchlässigen Wandung und im Inneren der zylindrischen undurchlässigen Wandung liegt, umfassen.

8. Vorrichtung nach Anspruch 2, dadurch gekennzeichnet, daß das schraubenartige Teil und die filtrierende Wandung aus einem Stück bestehen und frei rotierbar sind.

9. Vorrichtung nach Anspruch 2, dadurch gekennzeichnet, daß sie Antriebsmittel zur Rotation des internen Teiles von schraubenförmiger Form in bezug auf die filtrierende Wandung umfaßt und mechanische Mittel beinhaltet, welche die Reinigung der filtrierenden Wandung begünstigen, wie Bürsten und Abstreifer.

10. Vorrichtung nach einem der Ansprüche 1 bis 9, dadurch gekennzeichnet, daß die filtrierende Wandung aus einem Material besteht, das vorzugsweise durch die kontinuierliche Phase benetzbar ist.

11. Vorrichtung nach einem der Ansprüche 1 bis 10, dadurch gekennzeichnet, daß die filtrierende Wandung aus einer Membran besteht, welche Poren mit einem Durchmesser von zwischen 0,01 bis 10 μM umfaßt.

12. Verfahren zur Trennung eines Gemisches, das wenigstens eine kontinuierliche Phase I und wenigstens eine dispergierte Phase II umfaßt, wobei eine der Phasen eine als leicht bezeichnete Phase und die andere Phase eine als schwer bezeichnete Phase ist, dadurch gekennzeichnet, daß man das zu trennende Gemisch in den Durchgang der Vorrichtung nach Anspruch 1 so einbringt, daß das Fließen der Phasen I und II entlang dem Durchgang eine Rotationsbewegung verursacht, welche zu einer differenzierten Verschiebung der leichten Phase und der schweren Phase führt und daß die kontinuierliche Phase I wenigstens teilweise die filtrierende Wandung durchquert.

13. Verwendung der Vorrichtung nach einem der Ansprüche 1 bis 11 oder des Verfahrens nach Anspruch 12 zur Trennung eines aus zwei flüssigen Phasen gebildeten Gemisches.

14. Verwendung nach Anspruch 13, wobei das Gemisch aus einer wäßrigen flüssigen Phase und wenigstens einer organischen flüssigen Phase gebildet ist.

15. Verwendung der Vorrichtung nach einem der Ansprüche 1 bis 10 oder des Verfahrens nach Anspruch 12 zur Trennung eines Gemisches, für welches die dispergierte Phase eine gasförmige Phase umfaßt.

16. Verwendung der Vorrichtung nach einem der Ansprüche 1 bis 11 oder des Verfahrens nach Anspruch 12 zur Trennung eines Gemisches, für welches die dispergierte Phase wenigstens eine feste Phase umfaßt.

17. Verwendung der Vorrichtung nach einem der Ansprüche 1 bis 10 oder des Verfahrens nach Anspruch 12 zur Trennung eines Gemisches, für welches die kontinuierliche Phase I eine gasförmige Phase umfaßt.

FIG.1

FIG.2

FIG.8

## FIG.3

## FIG.4

## FIG.5

**FIG.7**

**FIG.6**

**FIG.9**

**FIG.10**

**FIG.11**